# EUROPEAN PATENT APPLICATION

(11) **EP 3 855 380 A1**
(43) Date of publication of application: **28.07.2021**
(21) Application number: 21152552.2
(22) Date of filing: 20.01.2021
(51) Int. Cl.: G06Q 20/18, G06Q 20/20, G07G 1/00

(54) **MERCHANDISE SALES PROCESS DEVICE AND CONTROL METHOD FOR A STORE**

(30) Priority: 24.01.2020 JP 2020009898
(71) Applicant: Toshiba TEC Kabushiki Kaisha, Tokyo 141-8562 (JP)
(72) Inventor: Yamada, Kuniyoshi, Shinagawa-ku, Tokyo 141-8562 (JP); Gotanda, Tsuyoshi, Shinagawa-ku, Tokyo 141-8562 (JP)
(74) Representative: Bandpay & Greuter

(57) **Abstract**

A management server includes a processor and communication interface to communicate with a user terminal and a communication device at a location in a store. When the processor receives a terminal code and shopping basket tag information from the user terminal, the processor stores the terminal code in association with the tag information and status information indicating a settlement process has not been completed. Upon receipt of a commodity code from the user terminal, the processor registers the code as commodity in a sales transaction, When the settlement process is completed for sales transaction, the processor updates the status information to indicate the settlement process has been completed. If the tag information is received from the first communication device, the processor issues a notification when the settlement has not been completed.

## Description

### FIELD

Embodiments described herein relate generally to a management server, a store system, and a store monitoring method.

### BACKGROUND

In recent years, various store systems have been devised, which allow a customer to register commodities (that is, items of merchandise for sale) for purchase by himself or herself using a mobile terminal such as a terminal attached to a shopping cart, the customer's smartphone, and the like, while he or she moves around in the store.

In such store systems, the customer operates the mobile terminal and registers the commodities, then settles the sales transaction by themselves. As such, it is generally difficult for a store employee to know whether the commodities placed in the cart have been actually paid for (which is also referred to as being a settled or a purchased commodity). Therefore, there is a concern that a store may not be able to prevent the customer from leaving the store without paying for (settling) items of merchandise.

### BRIEF DESCRIPTION OF THE DRAWINGS

FIG. 1 is a schematic view illustrating a store system according to one embodiment.
FIG. 2 is a schematic view illustrating a shopping basket used in a store system according to one embodiment.
FIG. 3 is a block diagram a mobile terminal according to one embodiment.
FIG. 4 is a block diagram illustrating a management server according to one embodiment.
FIG. 5 is a schematic diagram illustrating a management table.
FIG. 6 is a block diagram illustrating a virtual POS server according to one embodiment.
FIG. 7 is a schematic diagram illustrating a purchase registration list.
FIG. 8 is a block diagram illustrating a payment machine according to one embodiment.
FIG. 9 is a flowchart of a control procedure carried out by a mobile terminal according to one embodiment.
FIG. 10 is a flowchart of a control procedure carried out by a management server according to one embodiment.
FIG. 11 is a flowchart of a control procedure carried out by a management server according to one embodiment.
FIG. 12 is a flowchart of a control procedure carried out by a management server according to one embodiment.
FIG. 13 is a flowchart of a control procedure carried out by a payment machine according to one embodiment.
FIG. 14 is a flowchart of a control procedure carried out by a management server according to one embodiment.
FIG. 15 is a flowchart of a control procedure carried out by a management server according to one embodiment.
FIG. 16 is a flowchart of a control procedure carried out by a virtual POS server according to one embodiment.
FIG. 17 is a schematic view illustrating a purchase registration screen displayed on a mobile terminal according to one embodiment.

### DETAILED DESCRIPTION

One or more embodiments provide a store system, a merchandise sales processing device, and a control method thereof for preventing a customer from leaving a store with unpaid items of merchandise (commodities).

In general, according to one embodiment, a management server for a store system includes a processor and a communication interface configured to communicate with a user terminal and a first communication device installed at a first location in a store. The processor is configured to, upon receipt, from the user terminal, of a terminal code of the user terminal and tag information for a tag attached to a basket for storing a commodity sold in the store, store, a the memory, the terminal code in association with the tag information and status information indicating that a settlement process is not completed. The processor is further configured to, upon receipt of a commodity code for a commodity from the user terminal, register the commodity code in the memory. The processor is further configured to, when the settlement process is completed for the registered commodity, update the status information to indicate that the settlement process is completed. The processor is further configured to issue a notification upon receipt of the tag information from the first communication device if the tag information is associated with status information indicating the settlement is not completed.

Preferably, the tag is a wireless tag configured to transmit the tag information to the first communication device.

Preferably still, the tag has a two-dimensional code printed thereon indicating the tag information.

Preferably, the first location is an exit of the store.

Preferably, the notification causes a gate device installed at the exit to output an alert sound.

Preferably, the communication interface is further configured to communicate with a second communication device at a second location in the store, and the processor updates the status information when the tag information is read by the second communication device.

Preferably, the settlement process is performed by a payment machine at the second location.

Preferably, the communication interface is further configured to communicate with a third communication device at an entrance of the store, and the processor stores the terminal code in association with the tag information and the status information when the tag is read by the third communication device.

Preferably, the processor is further configured to generate a payment code for the user terminal to start the settlement process upon receipt of a request from the user terminal.

Preferably, the generated payment code is transmitted to a payment machine at a checkout counter of the store.

There is also provided a store system, comprising a first communication device at a first location in a store; and the management server as described above.

Preferably, the store system further comprises a gate device at an exit of the store which is the first location, configured to output an alert sound when the notification from the management server is received.

Preferably, the store system further comprises a second communication device at a second location in the store, configured to read the tag.

Preferably, the store system further comprises a payment machine at the second location and configured to perform the settlement process for registered commodities.

Preferably, the store system further comprises a third communication device at an entrance of the store and configured to read the tag.

There is also provided a store monitoring method with a management server configured to communicate with a user terminal and a first communication device installed at a first location in a store, the method comprising: upon receipt of a terminal code for a user terminal and tag information for a tag attached to a basket from the user terminal, storing, in a memory of a management server, the terminal code in association with the tag information and status information indicating a settlement process is not completed; upon receipt of a commodity code from the user terminal, registering the commodity code in the memory to register a commodity to be purchased; updating the status information to indicate that the settlement process is completed once the settlement is completed for every registered commodity; and issuing a notification upon receipt of the tag information from the first communication device if the tag information is associated with status information indicating that the settlement process is not completed.

Hereinafter, one or more embodiments are described with reference to the drawings. One embodiment describes a case where a smart phone possessed by a store customer is used as a mobile terminal for registering commodities sold at a store.

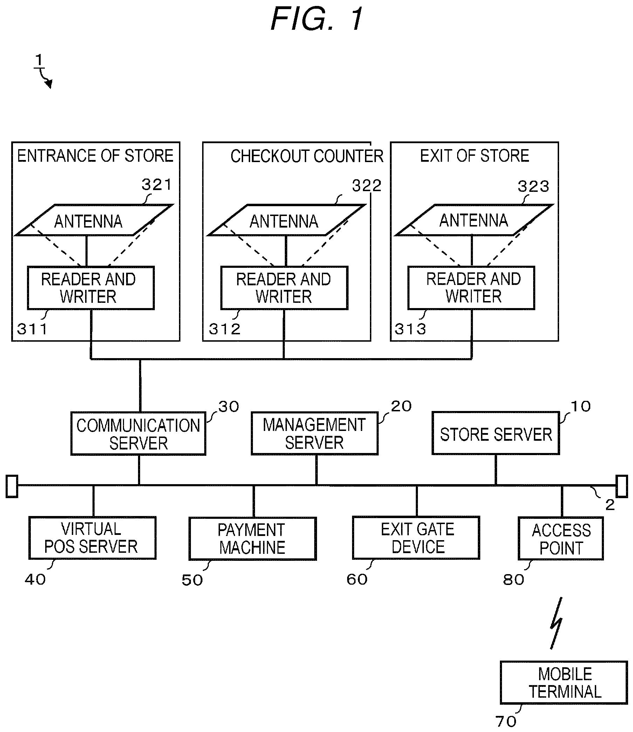

FIG. 1 is a schematic view illustrating a store system 1 according to one embodiment.

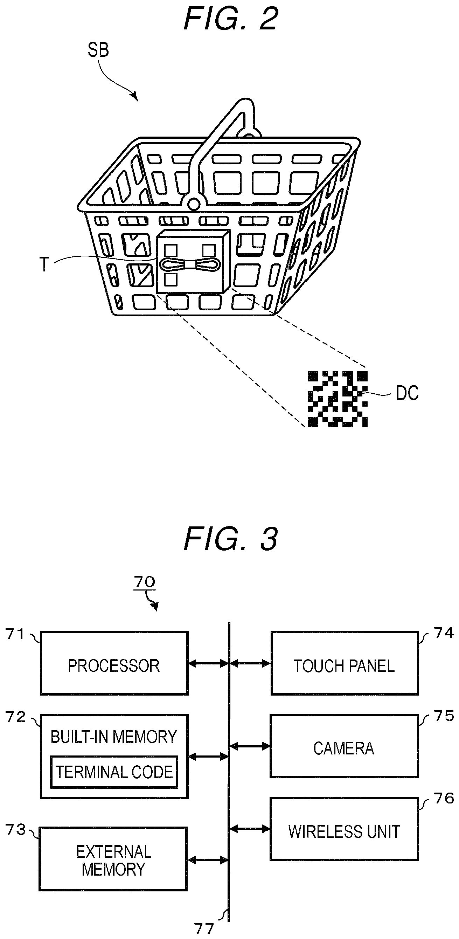

The store system 1 includes a store server 10, a management server 20, a communication server 30, a virtual point of sale (POS) server 40, a payment machine 50, an exit gate device 60, a mobile terminal 70, and an access point 80. The store server 10, the management server 20, the communication server 30, the virtual POS server 40, the payment machine 50, the exit gate device 60, and the access point 80 are connected to a network 2 such as a local area network (LAN). As shown in FIG. 3, the mobile terminal 70 includes a wireless unit 76. The mobile terminal 70 performs wireless communication with the access point 80. The access point 80 relays data transmitted by each device connected to the network 2, that is, the store server 10, the management server 20, the communication server 30, the virtual POS server 40, the payment machine 50, and the exit gate device 60, to the mobile terminal 70. In Fig. 1, only one access point 80 is provided, but two or more access points 80 may be provided depending on the scale of the store and the like.

The store server 10 manages a commodity database. In some instances, the commodity database may be a commodity master database. The commodity database stores a commodity data record in which data of commodities sold in the store are described. For example, the commodity data record includes a commodity code, a commodity name, and a price. The commodity code is identifies a commodity. A barcode representing such a commodity code is generally attached to each commodity.

The management server 20 coordinates operations of the store server 10, the communication server 30, the virtual POS server 40, the payment machine 50, the exit gate device 60, and the mobile terminal 70.

The communication server 30 relays data between the readers/writers 311, 312, and313 and the management server 20.

As shown in FIG. 2, the reader/writers 311 to 313 are respectively connected to antennas 321 to 323. The reader/writers 311 to 313 each read data from a wireless tag T located within the communication range of the antennas 321 to 323, respectively, and write data to a wireless tag T within the communication range of the antennas 321 to 323, respectively. When a plurality of wireless tags T are present within the communication range of one of the antennas 321 to 323, the respective reader/writer 311 to 313 can read data from each of the wireless tags T. In the same manner, a reader/writer 311 to 313 can write data to each of the wireless tags T present within communication range.

In this example, the antennas 321 to 323 are respectively provided at a store entrance, a checkout counter, and a store exit. There is a location in the store where shopping baskets SB (see FIG. 2) to be used in the store system 1 can be stored. This basket storage location may be outside the store entrance. Typically, a user enters the store entrance with one shopping basket SB that has been picked up from the basket storage location. The antenna 321 communicates with the wireless tag T of the shopping basket SB carried by the user who is entering the store. At the checkout counter, the antenna 322 is provided, for example, on the ceiling. The antenna 322 controls the intensity of radio waves emitted from the antenna 322 so that the data can be read from a wireless tag T attached to each of the shopping baskets SB even if a plurality of shopping baskets SB are at the payment place. The exit gate device 60 is provided at the store exit. The antenna 323 is attached, for example, to the exit gate device 60. In FIG. 1, three reader/writers (reader/writers 311 to 313) and three antennas (antennas 321 to 323) are provided, but any number of reader/writers and any number of antennas may be used. Considering the layout of the store, four or more reader/writers and corresponding antennas may be disposed in the store to secured appropriate coverage.

The mobile terminal 70 is a device that enables the user to input data relating to store entry, registration of a commodity to be purchased, and settlement, by himself or herself. The mobile terminal 70 is a portable communication terminal. The mobile terminal 70 at least has hardware for reading a data code DC, such as a barcode or a two-dimensional code. For example, a smart phone, a tablet terminal, or the like on which a digital camera is mounted can be used as the mobile terminal 70. Such a mobile terminal 70 may be personally owned by the customer/shopper.

The virtual POS server 40 cooperates with the mobile terminal 70 to perform functions of a POS terminal.

The payment machine 50 is a device that enables a store clerk or the user to make a payment for settling the purchased items. Any number of the payment machines 50 may be installed in a store.

The exit gate device 60 detects the passage of a user through the exits gate. The exit gate device 60 outputs a warning sound, for example, under the instruction from the management server 20 to prevent the user from leaving the store. As the exit gate device 60, for example, any device equipped with an alarm device can be used. In FIG. 1, only one exit gate device 60 is illustrated, but any number of exit gate devices may be installed in the store.

FIG. 2 is a schematic view illustrating a shopping basket SB used in the store system 1. The shopping basket SB is designed to store one or more commodities. The wireless tag T with a label that shows a data code DC is attached to each of the shopping baskets SB. The data code DC is obtained by encoding store setting information specific to a store or a business entity that operates the store into a two-dimensional code. The wireless tag T includes an antenna and a memory and performs wireless communication with the reader/writers 311 to 313 to write data to the memory and read data from the memory in a non-contact manner. The wireless tag T can be referred to as a radio frequency (RF) tag, an integrated circuit (IC) tag, an electronic tag, or the like.

FIG. 3 is a block diagram illustrating the mobile terminal 70. The mobile terminal 70 includes a processor 71, a built-in memory 72, an external memory 73, a touch panel 74, a camera 75, the wireless unit 76, and a system transmission line 77. The system transmission line 77 includes an address bus, a data bus, a control signal line, and the like. In the mobile terminal 70, the processor 71, the built-in memory 72, the external memory 73, the touch panel 74, the camera 75, and the wireless unit 76 are connected to each other via the system transmission line 77. In the mobile terminal 70, the processor 71, the built-in memory 72, and the external memory 73 that are connected via the system transmission line 77 make up a controller.

The processor 71 controls each component of the mobile terminal 70 so that various functions of the mobile terminal 70 are performed according to the operating system or one or more application programs. The processor 71 is, for example, a central processing unit (CPU).

The built-in memory 72 operates as a main memory of the mobile terminal 70. The built-in memory 72 includes a non-volatile memory area and a volatile memory area. The built-in memory 72 stores the operating system or application programs in the non-volatile memory area. The built-in memory 72 may store data required when the processor 71 executes a process for controlling each component of the mobile terminal 70 in the non-volatile or volatile memory area. The volatile memory area is used as a work area in which data is temporarily stored and rewritten by the processor 71. The non-volatile memory area is, for example, a read only memory (ROM). The volatile memory area is, for example, a random access memory (RAM).

The external memory 73 operates as an auxiliary storage of the mobile terminal 70. For example, the external memory 73 is an electric erasable programmable read-only memory (EEPROM), a hard disc drive (HDD), or a solid state drive (SSD), and the like. The external memory 73 stores data used when the processor 71 performs various processes, data generated by the process in the processor 71, or the like. The external memory 73 may store the application programs.

The application programs stored in the built-in memory 72 or the external memory 73 includes a control program for performing information processing in the mobile terminal 70. Any method may be used to install the control program in the built-in memory 72 or the external memory 73. The control program may be installed in the built-in memory 72 or the external memory 73 from a removable recording medium or via a network. Any recording medium may be used for storing the control program as long as the control program can be stored and can be read by the mobile terminal 70, e.g., a CD-ROM, a memory card, or the like.

The touch panel 74 is a device including both functions as an input device and a display device of the mobile terminal 70. The touch panel 74 detects a touch position with respect to the displayed image and outputs information indicating the touch position to the processor 71.

The camera 75 is an imaging device built in the mobile terminal 70. The camera 75 operates as an image capturing device for capturing a still image or a movie or a code reader for scanning the data code DC such as a barcode or a two-dimensional code according to the application programs installed in the mobile terminal 70.

The wireless unit 76 performs wireless communication of the data with the access point 80 according to a particular wireless communication protocol.

The mobile terminal 70 stores a terminal code in a non-volatile memory area in the built-in memory 72. The terminal code is a code for identifying the mobile terminal 70 among other mobile terminals.

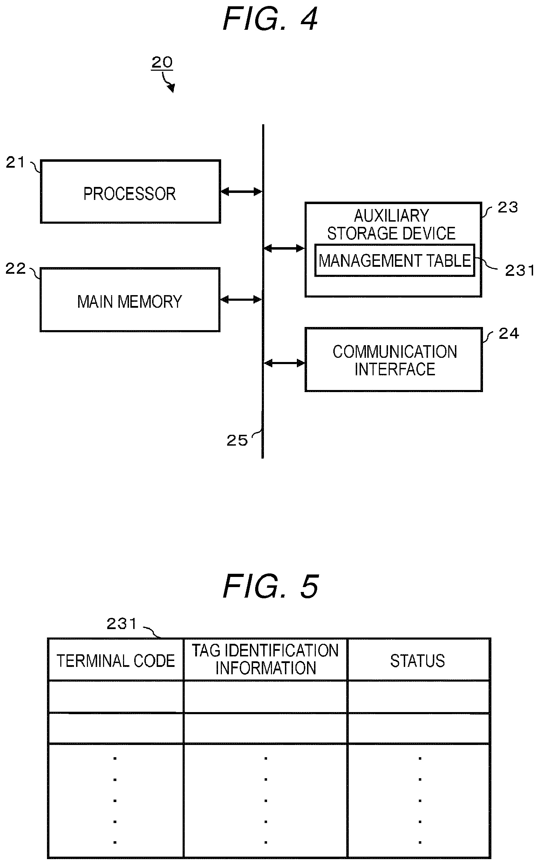

FIG. 4 is a block diagram illustrating the management server 20. The management server 20 includes a processor 21, a main memory 22, an auxiliary storage device 23, a communication interface 24, and a system transmission line 25. The system transmission line 25 includes an address bus, a data bus, a control signal line, and the like. In the management server 20, the processor 21, the main memory 22, the auxiliary storage device 23, and the communication interface 24 are connected to each other via the system transmission line 25. In the management server 20, the processor 21, the main memory 22, and the auxiliary storage device 23 connected via the system transmission line make up a controller.

The processor 21 controls each component of the management server 20 so that various functions of the management server 20 are performed according to the operating system or one or more application programs. The processor 21 is, for example, a CPU.

The main memory 22 includes a non-volatile memory area and a volatile memory area. The non-volatile memory area of the main memory 22 stores the operating system or the application programs. The non-volatile or volatile memory area of the main memory 22 may store data required when the processor 21 executes a process for controlling each component of the management server 20. The volatile memory area is used as a work area in which data is temporarily stored and rewritten by the processor 21. The non-volatile memory area is, for example, a ROM. The volatile memory area is, for example, a RAM.

The auxiliary storage device 23 is, for example, an EEPROM, an HDD, or an SSD. The auxiliary storage device 23 stores data used when the processor 21 performs various processes, data generated by the processor 21 through such processes or the like. The auxiliary storage device 23 may store the application programs.

The communication interface 24 is connected to the network 2. The communication interface 24 performs the data communication with other devices connected via the network 2 according to a particular communication protocol.

The auxiliary storage device 23 of the management server 20 stores a management table 231 shown in FIG. 5.

FIG. 5 is a schematic diagram illustrating the management table 231. As illustrated in FIG. 5, the management table 231 is a data table storing a terminal code, tag identification information, and a status of the wireless tag. The tag identification information is used to identify a wireless tag T. The status indicates the state of the wireless tag T identified by the corresponding terminal code and the corresponding tag identification information. The status of the wireless tag T includes "unsettled" and "settled". The "unsettled" is a state in which a process of settling a commercial transaction is not completed. The "settled" is a state in which a process of settling a commercial transaction is completed. Any other state of the wireless tag T may be stored in the status field.

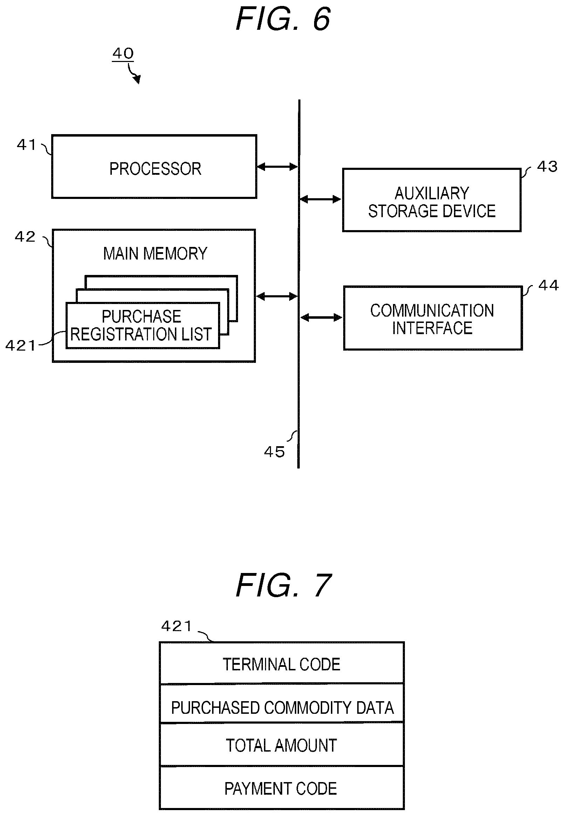

FIG. 6 is a block diagram illustrating the virtual POS server 40. The virtual POS server 40 includes a processor 41, a main memory 42, an auxiliary storage device 43, a communication interface 44, and a system transmission line 45. The system transmission line 45 includes an address bus, a data bus, a control signal line, and the like. In the virtual POS server 40, the processor 41, the main memory 42, the auxiliary storage device 43, and the communication interface 44 are connected to each other via the system transmission line 45. In the virtual POS server 40, the processor 41, the main memory 42, and the auxiliary storage device 43 connected via the system transmission line 45 make up a controller.

The processor 41 controls each component of the virtual POS server 40 so that various functions of the virtual POS server 40 are performed according to the operating system or one or more application programs. The processor 41 is, for example, a CPU.

The main memory 42 includes a non-volatile memory area and a volatile memory area. The non-volatile memory area of the main memory 42 stores the operating system or the application programs. The non-volatile or volatile memory area of the main memory 42 may store data required when the processor 41 executes a process for controlling each component of the virtual POS server 40. The volatile memory area is used as a work area in which data is temporarily stored and rewritten by the processor 41. The non-volatile memory area is, for example, a ROM. The volatile memory area is, for example, a RAM.

The auxiliary storage device 43 is, for example, an EEPROM, an HDD, or an SSD. The auxiliary storage device 43 stores data used when the processor 41 performs various processes, data generated by the process in the processor 41 or the like. The auxiliary storage device 43 may store the application programs.

The communication interface 44 is connected to the network 2. The communication interface 44 performs the data communication with other devices connected via the network 2 according to a particular communication protocol.

The virtual POS server 40 generates one or more purchase registration lists 421 shown in FIG. 7 and stores them in the volatile memory area of the main memory 42.

FIG. 7 is a schematic diagram illustrating the purchase registration list 421. As illustrated in FIG. 7, the purchase registration list 421 includes a terminal code, a purchase commodity data, a total amount, and a payment code. The payment code is described below. The purchase commodity data includes a commodity code, a commodity name, a price, a quantity, a purchase amount, and the like of a commodity to be purchased by the user. The quantity indicates the number of commodities to be purchased, which are identified by the commodity code, and the purchase amount is a total price to be paid by the user calculated from the price and the quantity. The total amount is a total purchase amount of commodities to be purchased by the user. The purchase registration list 421 is generated in correlation with the terminal code of the mobile terminal 70.

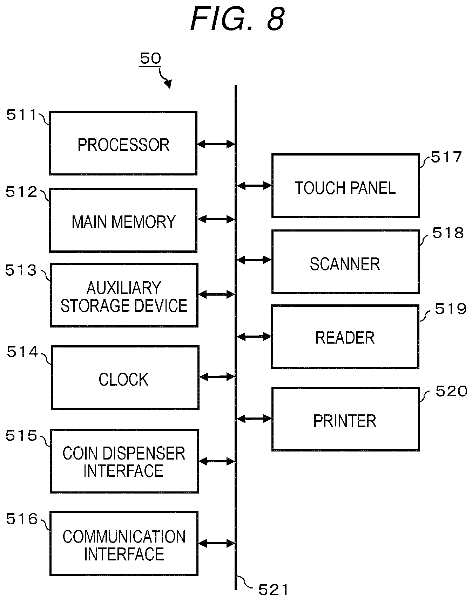

FIG. 8 is a block diagram illustrating the payment machine 50. The payment machine 50 includes a processor 511, a main memory 512, an auxiliary storage device 513, a clock 514, a coin dispenser interface 515, a communication interface 516, a touch panel 517, a scanner 518, a reader 519, a printer 520, and a system transmission line 521. The system transmission line 521 includes an address bus, a data bus, a control signal line, and the like. The processor 511, the main memory 512, the auxiliary storage device 513, the clock 514, the coin dispenser interface 515, the communication interface 516, the touch panel 517, the scanner 518, the reader 519, and the printer 520 are connected to each other via the transmission line 521. In the payment machine 50, the processor 511, the main memory 512, and the auxiliary storage device 513 connected via the system transmission line 521 make up a controller.

The processor 511 controls each component of the payment machine 50 so that various functions of the payment machine 50 are performed according to the operating system or one or more application programs. The processor 511 is, for example, a CPU.

The main memory 512 includes a non-volatile memory area and a volatile memory area. The non-volatile memory area of the main memory 512 stores the operating system or the application programs. The non-volatile or volatile memory area of the main memory 512 may store data required when the processor 511 executes a process for controlling each component. The volatile memory area of the main memory 512 is used as a work area in which data is temporarily stored and rewritten by the processor 511. The non-volatile memory area is, for example, a ROM. The volatile memory area is, for example, a RAM.

The auxiliary storage device 513 is, for example, an EEPROM, an HDD, or an SSD can be the auxiliary storage device 513. The auxiliary storage device 513 stores data used when the processor 511 performs various processes, data generated by the processor 511 through such processes or the like. The auxiliary storage device 513 may store the application programs.

The application programs stored in the main memory 512 or the auxiliary storage device 513 includes a control program for executing information processing in the payment machine 50. Any method may be used to install the control program in the main memory 512 or the auxiliary storage device 513. The control program is recorded in a removable recording medium, or the control program is downloaded via the network. Any recording medium may be used for storing the control program as long as the control program can be stored and can be read by the payment machine 50, e.g., a CD-ROM, a memory card, or the like.

The clock 514 is a real time clock. The processor 511 acquires current date and time based on information output by the clock 514.

The coin dispenser interface 515 is a data communication interface circuit connectable to an automatic coin dispenser. The coin dispenser interface 515 receives data on the amount of money deposited by a customer, data on a stored number of bills or coins, and the like, from the automatic coin dispenser. The coin dispenser interface 515 transmits to the automatic coin dispenser data on bills or coins to be dispensed from the automatic coin dispenser.

The communication interface 516 is a data communication interface circuit connectable to the network 2. The communication interface 516 performs the data communication with other devices connected via the network 2, according to a particular communication protocol.

The touch panel 517 is a device including both functions as an input device and a display device of the payment machine 50. The touch panel 517 detects a touch position with respect to the displayed image and outputs information about the touch position to the processor 511.

The scanner 518 is a reading device that reads a code symbol such as a barcode and a two-dimensional code. The scanner 518 may read a code symbol by scanning the symbol with laser light or by capturing an image using an imaging device.

The reader 519 reads data recorded in a recording medium and outputs the read data to the processor 511. If the recording medium is a magnetic card, the reader 519 is a magnetic card reader, and if the recording medium is a contact type IC card, the reader 519 is an IC card reader. If the recording medium is a non-contact type IC card or a smart phone including an RFID, an RFID reader is used as the reader 519.

The printer 520 dispenses a receipt by printing various character strings, images, and the like on receipt paper. As this type of printer 520, for example, a thermal printer or a dot impact printer can be used.

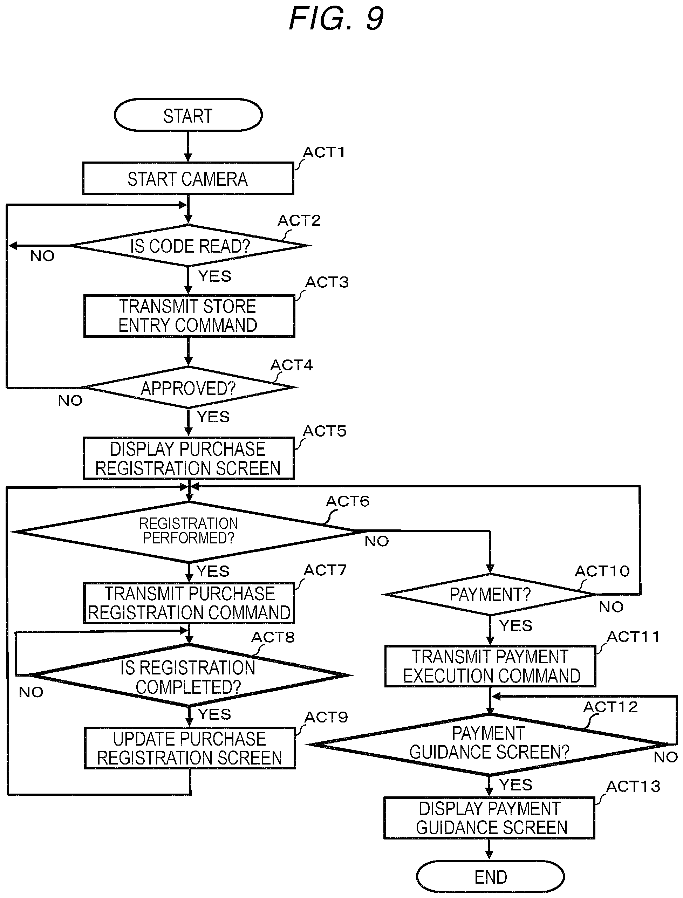

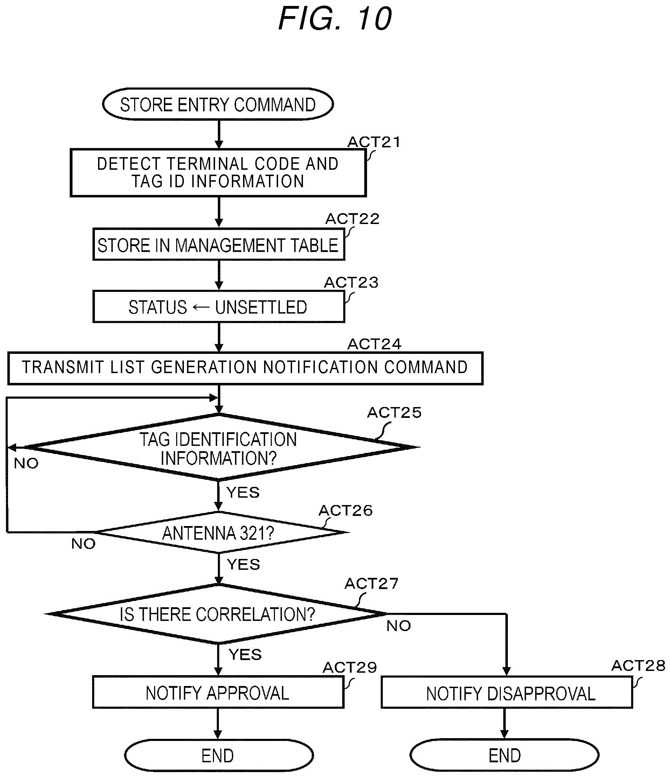

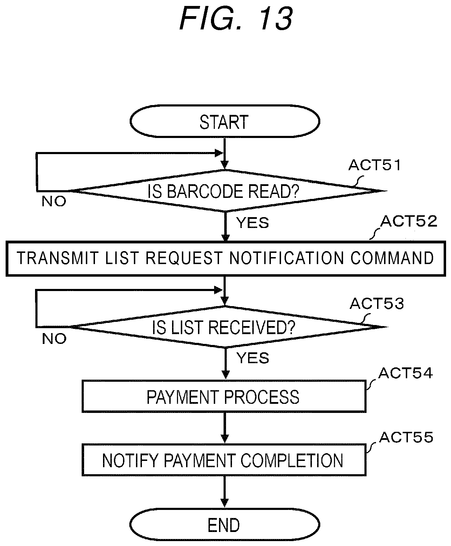

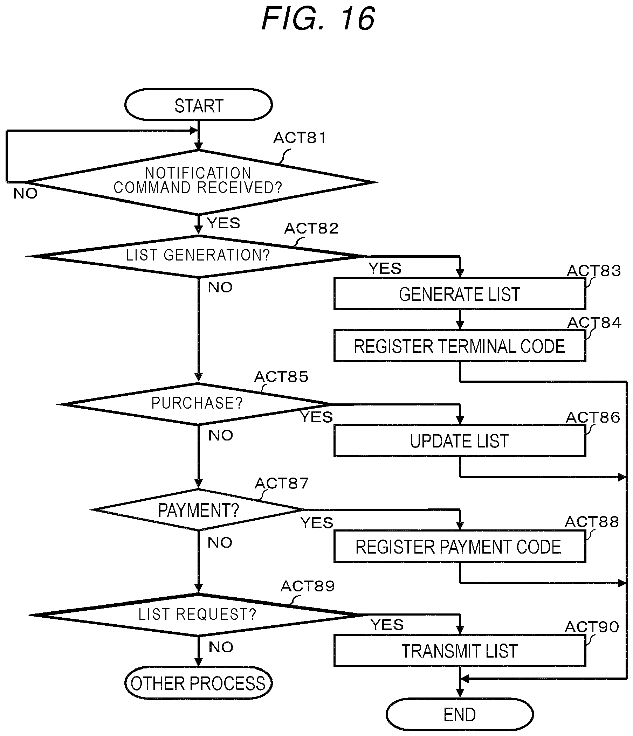

FIG. 9 is a flowchart illustrating a control procedure carried out by the mobile terminal 70. FIGS. 10 to 12, 14, and 15 are flowcharts illustrating control procedures carried out by the management server 20. FIG. 13 is a flowchart illustrating a control procedure carried out by the payment machine 50. FIG. 16 is a flowchart illustrating a control procedure carried out by the virtual POS server 40.

Hereinafter, with reference to these flowcharts, the operations of the store system 1 are described. The operations described below are examples, and any operation may be added or omitted as long as the same effect can be obtained.

Firstly, when the user goes to a store where the store system 1 is installed, before starting shopping, the user activates a particular application program (hereinafter called "shopping app") installed in the mobile terminal 70 possessed by the user. Then, the processor 71 starts the information processing illustrated in the flowchart of FIG. 9.

The processor 71 activates the camera 75 in Act 1. If the camera 75 is activated, the processor 71 causes the touch panel 74 to display a camera screen. The camera screen shows an image illustrating a reading area for reading a data code DC. The user holds the mobile terminal 70 over the data code DC attached to a shopping basket SB so that the data code fits within the reading area.

In Act 2, the processor 71 that has caused the camera screen to be displayed waits for the data code DC to be read by the camera 75. If the data code DC fits within the image, the processor 71 determines that the data code DC is read. The processor 71 determines YES in Act 2 and proceeds to Act 3.

In Act 3, the processor 71 controls the wireless unit 76 to transmit a store entry command to the management server 20. By such control, the wireless unit 76 wirelessly transmits the entry command. The entry command is received by the access point 80 and sent to the management server 20 via the network 2. The entry command includes the terminal code and the data code DC. The data code DC includes tag identification information.

The processor 21 of the management server 20 that has received the entry command starts the command reception process of the procedure illustrated in the flowchart of FIG. 10.

The processor 21 detects the terminal code and the tag identification information from the entry command in Act 21. The processor 21 stores the acquired terminal code and the tag identification information in the management table 231 in Act 22. The processor 21 sets the status corresponding to the terminal code and the tag identification information to be "unsettled" in Act 23.

The processor 21 controls the communication interface 24 to transmit a list generation notification command to the virtual POS server 40 in Act 24. By such control, the list generation notification command is transmitted via the communication interface 24. The list generation notification command can be received by the virtual POS server 40 via the network 2. The list generation notification command includes the terminal code detected in the process of Act 21.

The processor 41 of the virtual POS server 40 waits for a notification command in Act 81 of FIG. 16. If the notification command is received via the communication interface 44, the processor 41 determines YES in Act 81 and proceeds to Act 82. In Act 82, the processor 41 checks whether the notification command received is a list generation notification command. When a list generation notification command is received, the processor 41 determines YES in Act 82 and proceeds to Act 83.

The processor 41 generates a purchase registration list 421 in the main memory 42 in Act 83. Then, the processor 41 registers the terminal code included in the list generation notification command in the purchase registration list 421 as Act 84. The processor 41 then ends the information processing illustrated in the flowchart of FIG. 16.

The process description now refers back to FIG. 10.

After the transmission of the list generation notification command in Act 24, the processor 21, in Act 25, checks whether the tag identification information is received. If tag identification information is received, the processor 21 determines YES in Act 25 and proceeds to Act 26. In Act 26, the processor 21 checks whether the tag identification information was received from the antenna 321 provided at the store entrance. The reader/writers 311 to 313 each transmit the tag identification information with identification information specific to the transmitting reader/ writer, and the management server 20 identifies which of the antennas 321 to 323 has received the tag identification information using the identification information for the reader/writers 311 to 313.

If tag identification information is not received from the antenna 321, the processor 21 determines NO in Act 26 and returns to Act 25. If tag identification information is received from the antenna 321, the processor 21 determines YES in Act 26 and proceeds to Act 27.

In Act 27, the processor 21 checks whether the tag identification information received from the antenna 321 is stored in correlation with a terminal code in the management table 231. If the tag identification information is not correlated to a terminal code, the processor 21 determines NO in Act 27 and proceeds to Act 28. The processor 21 controls the communication interface 24 to transmit a disapproval notification command to the mobile terminal 70 as Act 28. By such control, the disapproval notification command is transmitted via the communication interface 24. The disapproval notification command is wirelessly transmitted from the access point 80 via the network 2 and received by the mobile terminal 70, which has transmitted the entry command. In the above, the processor 21 ends the entry command reception process.

If the tag identification information is stored in a correlated manner, the processor 21 determines YES in Act 27 and proceeds to Act 29. The processor 21 controls the communication interface 24 to transmit an approval notification command to the mobile terminal 70 as Act 29. By such control, the approval notification command is transmitted via the communication interface 24. The approval notification command is wirelessly transmitted from the access point 80 via the network 2 and received by the mobile terminal 70, which has transmitted the entry command. Here, the processor 21 ends the entry command reception process.

The description returns back to FIG. 9.

After the transmission of the store entry command in Act 3, the processor 71 of the mobile terminal 70 waits for the approval notification command from the management server 20 as Act 4. If the disapproval notification command is received from the management server 20, the processor 71 determines NO in Act 4 and returns to Act 2. Therefore, the processor 71 instructs the touch panel 74 to further read the data code DC.

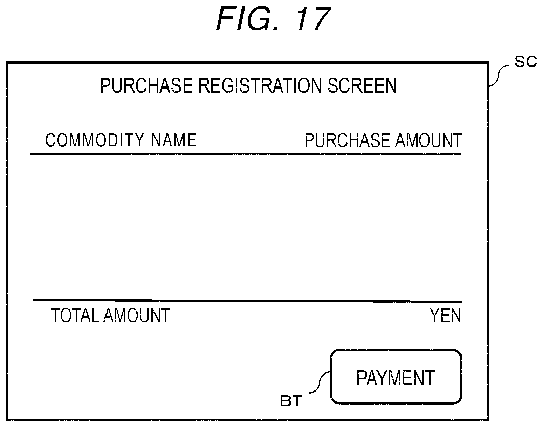

If the approval notification command is received from the management server 20, the processor 71 determines YES in Act 4 and proceeds to Act 5. The processor 71 causes the touch panel 74 to display a purchase registration screen SC (see FIG. 17) as Act 5.

FIG. 17 is a schematic diagram illustrating a purchase registration screen SC. As illustrated in FIG. 17, the name of a commodity registered to be purchased and the purchase amount and the total amount are indicated on the purchase registration screen SC. An image of a payment button BT for proceeding with payment is also displayed in the purchase registration screen SC.

The user who checks the purchase registration screen SC moves around in the store and puts a commodity in the shopping basket SB. When putting the commodity in the shopping basket SB, the user operates the mobile terminal 70 to read the barcode attached to the commodity by the camera 75. If the barcode is read by the camera 75, the corresponding commodity code is recognized to the mobile terminal 70. That is, the purchase registration of the commodity identified by the commodity code is performed.

A barcode may not be attached to a particular commodity such as fresh food. If a barcode is not attached to such a commodity, the user operates a commodity button corresponding to the commodity via the screen of the touch panel 74. If the commodity button is operated, the commodity code of the commodity corresponding to the commodity button is input to the mobile terminal 70. That is, the purchase registration of the commodity identified by the commodity code is performed.

The description returns back to FIG. 9.

If the process of Act 5 ends, the processor 71 checks whether the purchase registration is performed as Act 6. If the processor 71 confirms that the purchase registration is performed, the processor 71 determines YES in Act 6 and proceeds to Act 7. The processor 71 controls the wireless unit 76 to transmit a purchase registration command to the management server 20 as Act 7. By such control, the wireless unit 76 wirelessly transmits the purchase registration command. The purchase registration command is received by the access point 80 and sent to the management server 20 via the network 2. The purchase registration command includes the terminal code stored in the built-in memory 72 and the commodity code of the commodity registered to be purchased.

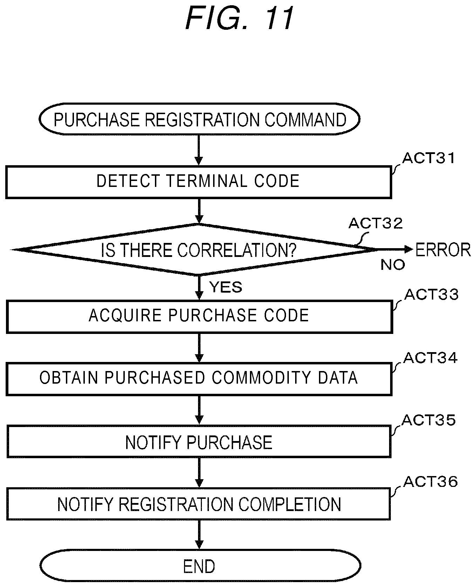

The processor 21 of the management server 20 that has received the purchase registration command starts the command reception process illustrated in the flowchart of FIG. 11.

The processor 21 detects the terminal code from the purchase registration command as Act 31. Then, the processor 21 searches the management table 231 as Act 32 and checks whether the tag identification information is stored in correlation with the terminal code. If the tag identification information is not stored in a correlated manner, the processor 21 determines NO in Act 32 and determines that an error has occurred. If the tag identification information is stored in a correlated manner, the processor 21 determines YES in Act 32 and proceeds to Act 33.

The processor 21 acquires the commodity code included in the purchase registration command as Act 33. The processor 21 obtains the purchase commodity data based on the commodity code as Act 34.

The processor 21 controls the communication interface 24 to transmit a purchase notification command to the virtual POS server 40 as Act 35. By such control, the purchase notification command is transmitted via the communication interface 24. The purchase notification command is received by the virtual POS server 40 via the network 2. The purchase notification command includes the terminal code acquired in the process of Act 31 and the purchase commodity data obtained in the process of Act 34.

The processor 41 of the virtual POS server 40 detects reception of a notification command in Act 81 of FIG. 16. If the notification command is not the list generation notification command in Act 82, the processor 41 determines NO and proceeds to Act 85. The processor 41 checks whether the notification command is the purchase notification command as Act 85. Here, the purchase notification command is received, so that the processor 41 determines YES in Act 85 and proceeds to Act 86. The processor 41 updates the purchase registration list 421 as Act 86. Specifically, the processor 41 registers the purchase commodity data included in the purchase notification command in the purchase registration list 421 in which the terminal code included in the purchase notification command is registered. Here, the processor 41 ends the information processing illustrated in the flowchart of FIG. 16.

The description returns back to FIG. 11.

After the transmission of the purchase notification command in Act 35, the processor 21 of the management server 20 controls the communication interface 24 to transmit a registration completion notification command to the mobile terminal 70 as Act 36. By such control, the registration completion notification command is transmitted via the communication interface 24. The registration completion notification command is wirelessly transmitted from the access point 80 via the network 2 and is received by the mobile terminal 70, which has transmitted the purchase registration command. Here, the processor 21 ends the purchase registration command reception process.

The description returns back to FIG. 9.

After the transmission of the purchase registration command in Act 7, the processor 71 of the mobile terminal 70 waits for the registration completion notification command from the management server 20 as Act 8. If the registration completion notification command is received from the management server 20, the processor 71 determines YES in Act 8 and proceeds to Act 9.

The processor 71 updates the purchase registration screen SC as Act 9. That is, the processor 71 updates the purchase registration screen SC so that the commodity name of the commodity registered to be purchased and the purchase amount are added, and the purchase amount is added to the total amount. The processor 71 that causes the purchase registration screen SC to be updated returns to Act 6. The processor 71 in the waiting state of Act 6 further checks whether the purchase registration is performed and executes the processes of Acts 7 to 9 in the same manner as described above. Accordingly, also in the management server 20, the processor 21 further executes the purchase registration command reception process illustrated in FIG. 11.

If the purchase registration is not performed, the processor 71 determines NO in Act 6 and proceeds to Act 10. The processor 71 checks whether the payment is instructed as Act 10.

The image of the payment button BT is displayed in the purchase registration screen SC. The user who wants to proceed with the payment touches the payment button BT. If the payment button BT is touched, the processor 71 recognizes that the payment is instructed. If the payment is not instructed, the processor 71 determines NO in Act 10 and returns to Act 6.

If it is confirmed that the payment is instructed, the processor 71 determines YES in Act 10 and proceeds to Act 11.

The processor 71 controls the wireless unit 76 to transmit a payment execution command to the management server 20 as Act 11. By such control, the wireless unit 76 wirelessly transmits the payment execution command. The payment execution command is received by the access point 80 and sent to the management server 20 via the network 2. The payment execution command includes the terminal code stored in the built-in memory 72.

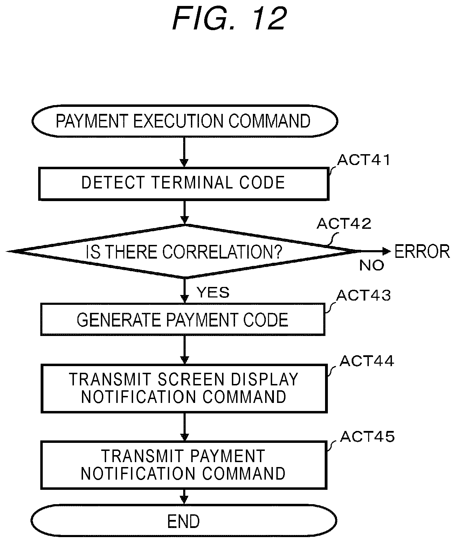

The processor 21 of the management server 20 that has received the payment execution command starts the command reception process illustrated in the flowchart of FIG. 12.

The processor 21 detects the terminal code from the payment execution command in Act 41. The processor 21 checks whether the tag identification information is stored in correlation with a terminal code in Act 42. If the tag identification information is not stored in a correlated manner, the processor 21 determines NO in Act 42 and determines that an error has occurred. If the tag identification information is stored in a correlated manner, the processor 21 determines YES in Act 42 and proceeds to Act 43.

The processor 21 generates a payment code in Act 43. The payment code is a code to identify a user who performs the payment with the payment machine 50. The payment code is generated for each user who performs payment in the payment machine 50.

The processor 21 controls the communication interface 24 to transmit a screen display notification command to the mobile terminal 70, which causes the mobile terminal 70 to display a payment guidance screen, in Act 44. By such control, the screen display notification command is transmitted via the communication interface 24. The screen display notification command is wirelessly transmitted from the access point 80 via the network 2 and is received by the mobile terminal 70, which has transmitted the payment execution command. The screen display notification command includes image data of the payment code generated in Act 43.

The description returns back to FIG. 9.

After the transmission of the payment execution command in Act 12, the processor 71 of the mobile terminal 70 checks whether the screen display notification command has been received from the management server 20 in Act 12. If the screen display notification command is received, the processor 71 determines YES in Act 12 and proceeds to Act 13. The processor 71 controls the touch panel 74 to display the payment guidance screen in Act 13. The image of payment barcode is displayed on the payment guidance screen. Here, the processor 71 ends the information processing illustrated in the flowchart of FIG. 9.

The description returns back to FIG. 12.

After the transmission of the screen display notification command in Act 44, the processor 21 of the management server 20 controls the communication interface 24 to transmit a payment notification command to the virtual POS server 40 in Act 45. By such control, the payment notification command is transmitted via the communication interface 24. The payment notification command is received by the virtual POS server 40 via the network 2. The payment notification command includes the terminal code obtained in the process of Act 41 and the payment code generated in the process of Act 43. Here, the processor 21 ends the payment execution command reception process.

The processor 41 of the virtual POS server 40 detects reception of a notification command in Act 81 of FIG. 16. If the received notification command in Act 85 is not the purchase notification command, the processor 41 determines NO and proceeds to Act 87. The processor 41 checks whether the received notification command is a payment notification command in Act 87. Here, since the payment notification command is received, the processor 41 determines YES in Act 87 and proceeds to Act 88. In Act 88, the processor 41 adds (registers) the payment code included in the payment notification command to the purchase registration list 421 for the terminal code included in the payment notification command. The processor 41 then ends the information processing illustrated in the flowchart of FIG. 16.

The user who have confirmed the payment guidance screen goes to the checkout counter and operates the scanner 518 of the payment machine 50 to read the payment barcode displayed on the payment guidance screen.

The processor 511 of the payment machine 50 checks whether a payment barcode has been read, in Act 51 of FIG. 13. If the payment barcode has been read, the processor 511 determines YES in Act 51 and proceeds to Act 52.

The processor 511 controls the communication interface 516 to transmit a list request notification command to the virtual POS server 40 in Act 52. By such control, the communication interface 516 transmits the list request notification command. The list request notification command can be received by the virtual POS server 40 via the network 2. The list request command includes the payment code obtained by analyzing the payment barcode.

The processor 41 of the virtual POS server 40 detects reception of a notification command in Act 81 of FIG. 16. If the received notification command is not the payment notification command in Act 87, the processor 41 determines NO and proceeds to Act 89. The processor 41 checks whether the received notification command is a list request notification command in Act 89. If the list request notification command is received, the processor 41 determines YES in Act 89 and proceeds to Act 90. The processor 41 controls the communication interface 44 to transmit to the payment machine 50 data of the purchase registration list 421 in which the payment code included in the list request notification command is registered, in Act 90. The processor 41 then ends the information processing illustrated in the flowchart of FIG. 16.

The process description returns back to FIG. 13.

After the transmission of the list request notification command, the processor 511 of the payment machine 50 waits for the data of the purchase registration list 421 in Act 53. If the data of the purchase registration list 421 is received from the virtual POS server 40, the processor 511 determines YES in Act 53 and proceeds to Act 54. In Act 54, the processor 511 executes the payment process based on the data of the received purchase registration list 421. The payment process may be performed according to any known process. The processor 511 controls the communication interface 512 to transmit a payment completion command to the management server 20. The payment completion command includes the terminal code registered in the purchase registration list 421. The processor 511 then ends the information processing illustrated in the flowchart of FIG. 13.

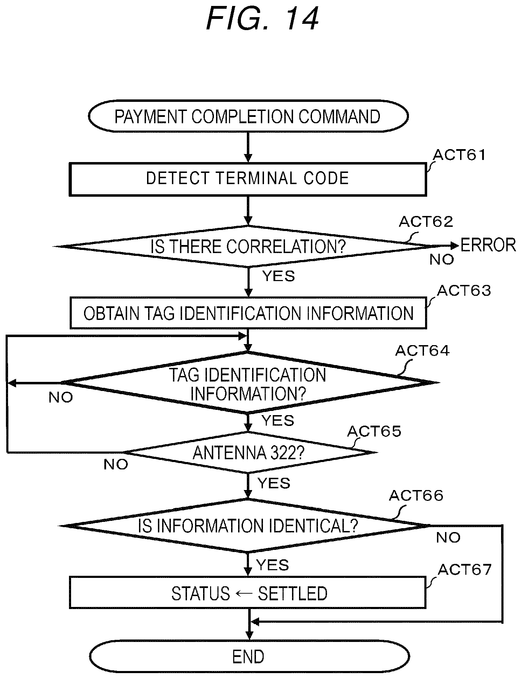

The processor 21 of the management server 20 that has received a payment completion command starts the command reception process illustrated in the flowchart of FIG. 14.

The processor 21 detects the terminal code in Act 61. In Act 62, processor 21 checks whether the tag identification information is stored in correlation with the terminal code. If the tag identification information is not stored in a correlated manner, the processor 21 determines NO in Act 62 and determines that an error has occurred. If the tag identification information is stored in a correlated manner, the processor 21 determines YES in Act 62 and proceeds to Act 63.

In Act 63, the processor 21 obtains the tag identification information from the management table 231. In Act 64, the processor 21 checks whether the tag identification information has been received. If the tag identification information is received, the processor 21 determines YES in Act 64 and proceeds to Act 65. In Act 65, processor 21 checks whether the tag identification information has been received from the antenna 322 provided in the payment place.

If the tag identification information is not received from the antenna 322, the processor 21 determines NO in Act 65 and returns to Act 64. If the tag identification information is received from the antenna 322, the processor 21 determines YES in Act 65 and proceeds to Act 66.

The processor 21 checks whether the tag identification information obtained in Act 63 and the tag identification information received in Act 65 are identical in Act 66. If the tag information is not identical, the processor 21 determines NO in Act 66 and ends the information processing illustrated in the flowchart of FIG. 14. If the tag information is identical, the processor 21 determines YES in Act 66 and proceeds to Act 67.

The processor 21 sets the status of the management table 231 corresponding to the tag identification information to be "settled" in Act 67. The processor 21 then ends the information processing illustrated in the flowchart of FIG. 14.

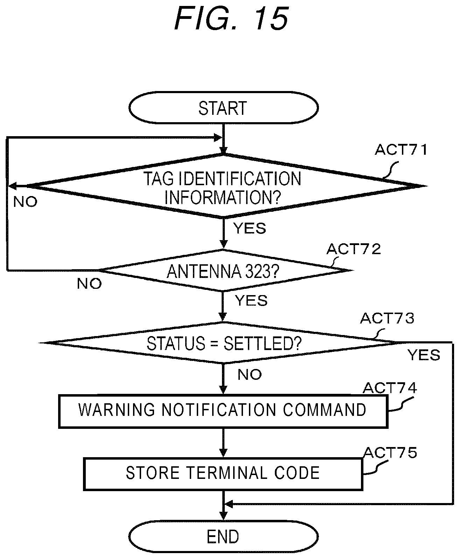

If the payment is completed at the checkout counter (payment place), the user then leaves the store by the store exit where the exit gate device 60 is installed, together with the shopping basket SB containing the purchased commodity. When the user's passage is detected by the exit gate device 60, the processor 21 of the management server 20 starts the information processing illustrated in the flowchart of FIG. 15.

In Act 71, the processor 21 checks whether tag identification information is received. If the tag identification information is received, the processor 21 determines YES in Act 71 and proceeds to Act 72. Then, the processor 21 checks whether the tag identification information was received from the antenna 323 provided at the exit in Act 72.

If the tag identification information is not received from the antenna 323, the processor 21 determines NO in Act 72 and returns to Act 71. If the tag identification information is received from the antenna 323, the processor 21 determines YES in Act 72 and proceeds to Act 73.

In Act 73, the processor 21 checks whether the status of the management table 231 is "settled". If the status is "settled", the processor 21 determines YES in Act 73 and ends the information processing illustrated in the flowchart of FIG. 15. If the status is not "settled", that is, the status is still "unsettled", the processor 21 determines NO in Act 73 and proceeds to Act 74.

In Act 74, the processor 21 controls the communication interface 24 to transmit a warning notification command to the exit gate device 60 so that the exit gate device 60 outputs warning. By such control, the warning notification command is transmitted via the communication interface 24. The warning notification command can be received by the exit gate device 60 via the network 2.

The exit gate device 60 that has received the warning notification command outputs a warning sound such as a buzzer sound. That is, a warning sound is emitted to prevent the user from leaving the store if the settlement is not completed. The buzzer may ring so that a different warning sound is emitted depending on the type of the drive signal provided by the exit gate device 60. The buzzer can sound intermittently or continuously to emit a variable warning sound.

After the transmission of the warning notification command in Act 74, the processor 21 of the management server 20 stores the terminal code of the mobile terminal 70 of the user in Act 75. The processor 21 then ends the information processing illustrated in the flowchart of FIG. 15.

As described above, the management server 20 executes Acts 21 to 23 of FIG. 10. That is, the management server 20 correlates the terminal code set for the mobile terminal 70 being used by the user and the information from the wireless communication medium (that is, the tag identification information) generated by the store.

The management server 20 executes Acts 31 to 36 of FIG. 11. That is, the management server 20 registers a purchase commodity based on the commodity data input by the mobile terminal 70 correlated with the tag identification information.

The management server 20 executes Acts 61 and 67 of FIG. 14. That is, the management server 20 cancels the correlation of the terminal code to the tag identification information after the settlement of the registered commodity.

The management server 20 executes Acts 71 to 74 of FIG. 15. That is, if a radio wave transmitted from a wireless tag T for which the correlation with the terminal code has not been cancelled is received by the antenna 323, the management server 20 outputs a notification signal.

Accordingly, in the store system 1, when the settlement has not yet been completed, the correlation between the terminal code of the mobile terminal 70 and the tag identification information is not cancelled. Therefore, if there is an attempt by a user to leave the store without completing the settlement, a warning sound is emitted, so that the unauthorized leaving can be notified and prevented. By the correlation between the terminal code and the tag identification information, the user can be identified based on terminal code.

If the data code DC attached to the shopping basket SB has been read by the camera 75 of the mobile terminal 70, the terminal code and the tag identification information are correlated with each other. After the correlation has been performed, the entry can be approved, so the user is not necessarily required to perform member registration, and thus the present system can be effective without requiring member registration by each potential customer entering the store.

According to the embodiments, a case where the wireless tag T with the label on which the data code DC is displayed is attached to the shopping basket SB is described. However, the wireless tag T is not necessarily attached to the shopping basket SB. For example, the wireless tag T may be attached to a reusable shopping bag carried by the user.

According to the embodiments, the tag reader/writer antennas (antennas 321 to 323) are provided at the store entrance, the checkout counter, and the store exit. However, tag reader/writer antennas may be provided to cover a sales floor. As such, the store system 1 can be used for sales promotion purposes such as providing a coupon to a user who browses in a specific place or places in the store.

In the above embodiments, a management server 20 is described as an aspect of a merchandise sales processing device. However, the management server 20 may further have a function or functions of at least one of the store server 10 and the virtual POS server 40. In other words, the store server 10 and/or the virtual POS server 40 may be integrated with management server 20.

According to the aforementioned embodiments, the payment process is executed by using the payment machine 50. The payment process need not be executed by the payment machine 50 and other payment options can be available.

According to the aforementioned embodiments, a label or the like prepared by the store indicates a two-dimensional data code DC. The label or the like may indicate a data code of another type, e.g., one dimensional barcode.

According to the aforementioned embodiments, it is described that the exit gate device 60 that has received the warning notification command rings a buzzer. The warning notification is not limited to a buzzer sound. For example, the warning notification command may instead, or in addition, trigger a closing of a gate at the store exit.

While certain embodiments have been described, these embodiments have been presented by way of example only, and are not intended to limit the scope of the inventions. Indeed, the novel embodiment described herein may be embodied in a variety of other forms; furthermore, various omissions, substitutions and changes in the form of the embodiments described herein may be made without departing from the scope of the inventions. The accompanying claims and their equivalents are intended to cover such forms or modifications as would fall within the scope of the inventions.

## Claims

1. A management server, comprising:
a communication interface configured to communicate with a user terminal and a first communication device at a first location in a store; and
a processor configured to:
upon receipt of a terminal code of the user terminal and tag information of a tag attached to a basket from the user terminal, store, in a memory, the terminal code in association with the tag information and status information indicating a settlement process is not completed,
upon receipt of a commodity code from the user terminal, register the commodity code in the memory to register a commodity to be purchased,
update the status information to indicate that the settlement process is completed once settlement is completed for every registered commodity, and
issue a notification upon receipt of the tag information from the first communication device if the tag information is associated with status information indicating the settlement process is not completed.

2. The management server according to claim 1, wherein the tag is a wireless tag configured to transmit the tag information to the first communication device.

3. The management server according to claim 1 or 2, wherein the first location is an exit of the store.

4. The management server according to claim 3, wherein the notification causes a gate device installed at the exit to output an alert sound.

5. The management server according to any one of claims 1 to 4, wherein
the communication interface is further configured to communicate with a second communication device at a second location in the store, and
the processor updates the status information when the tag information is read by the second communication device.

6. The management server according to claim 5, wherein the settlement process is performed by a payment machine at the second location.

7. The management server according to any one of claims 1 to 6, wherein
the communication interface is further configured to communicate with a third communication device at an entrance of the store, and
the processor stores the terminal code in association with the tag information and the status information when the tag is read by the third communication device.

8. The management server according to any one of claims 1 to 7, wherein the processor is further configured to generate a payment code for the user terminal to start the settlement process upon receipt of a request from the user terminal.

9. The management server according to claim 8, wherein the generated payment code is transmitted to a payment machine at a checkout counter of the store.

10. A store system, comprising:
a first communication device at a first location in a store; and
the management server according to any one of claims 1 to 9.

11. The store system according to claim 10, further comprising:
a gate device at an exit of the store which is the first location, configured to output an alert sound when the notification from the management server is received.

12. The store system according to claim 10 or 11, further comprising:
a second communication device at a second location in the store, configured to read the tag.

13. The store system according to claim 12, further comprising:
a payment machine at the second location and configured to perform the settlement process for registered commodities.

14. The store system according to any one of claims 10 to 13, further comprising:
a third communication device at an entrance of the store and configured to read the tag.

15. A store monitoring method with a management server configured to communicate with a user terminal and a first communication device installed at a first location in a store, the method comprising:
upon receipt of a terminal code for a user terminal and tag information for a tag attached to a basket from the user terminal, storing, in a memory of a management server, the terminal code in association with the tag information and status information indicating a settlement process is not completed;
upon receipt of a commodity code from the user terminal, registering the commodity code in the memory to register a commodity to be purchased;
updating the status information to indicate that the settlement process is completed once the settlement is completed for every registered commodity; and
issuing a notification upon receipt of the tag information from the first communication device if the tag information is associated with status information indicating that the settlement process is not completed.
